# EUROPÄISCHE PATENTSCHRIFT

(11) **EP 1 079 291 B1**
(45) Veröffentlichungstag und Bekanntmachung des Hinweises auf die Patenterteilung: **09.04.2008**
(21) Anmeldenummer: 99120577.4
(22) Anmeldetag: 16.10.1999
(51) Int. Cl.: G05B 19/418, G05B 19/042

(54) **Messwertanzeigeeinheit**
Measurement display unit
Unité d'affichage de valeur de mesure

(30) Priorität: 21.08.1999 EP 99116446
(43) Veröffentlichungstag der Anmeldung: 28.02.2001
(73) Patentinhaber: ENDRESS + HAUSER WETZER GmbH + Co. KG, 87481 Nesselwang (DE)
(72) Erfinder: Umkehrer, Alfred Dipl.-Ing., 87659 Hopferau (DE); Waldhauser, Dieter Dipl.-Ing., 87435 Kempten (DE); Kilian, Markus Dipl.-Ing., 79249 Merzhausen (DE)
(74) Vertreter: Andres, Angelika Maria

(56) Entgegenhaltungen:
- WO-A-97/41493
- VAN DER BIJL W: "DIGITAL DATA COMMUNICATION, CONTROL AND MAINTENANCE" JOURNAL A,BE,SOFT VISION, BRUSSELS, Bd. 34, Nr. 1, 1. April 1993 (1993-04-01), Seiten 19-23, XP000361877 ISSN: 0771-1107
- GÜNTER PINKOWSKI: "Einheitliche, herstellerunabhängige Anzeige-Bedienoberfläche für kommunikationsfähige Messumformer" ATP AUTOMATISIERUNGSTECHNISCHE PRAXIS, Bd. 34, Nr. 9, September 1992 (1992-09), Seiten 530-537, München,DE

## Beschreibung

Die Erfindung betrifft eine Meßwertanzeigeeinheit für einen Datenbus.

Im Bereich der Prozeßautomation und Prozeßsteuerung werden vielfach Datenbussysteme eingesetzt, die eine standardisierte Datenkommunikation zwischen den einzelnen Datenbusteilnehmer ermöglichen. In der Regel erfolgt die zentrale Prozeßsteuerung von einem Prozeßleitsystem aus, das mit mehreren Feldgeräten verbunden ist, die entweder Informationen über den Prozeßablauf liefern oder den Prozeßablauf steuern.
Bei den Feldgeräten handelt es sich meist entweder um Sensoren (z.B. für Temperatur, Druck oder Füllstand) oder Aktoren (z.B. Ventile), die an den jeweiligen Prozeßkomponenten angeordnet sind.
Die Sensoren erfassen die notwendigen Prozeßvariablen und wandeln die analogen Meßsignale in digitale Meßwerte um, die über die Datenbusleitung zum Prozeßleitsystem gesendet werden. Das Prozeßleitsystem wertet die digitalen Meßwerte aus und steuert die Aktoren mittels digitaler Steuerbefehle, die über den Datenbus gesendet werden, an.

Häufig ist es notwendig bzw. erwünscht, den von einem Sensor aufgenommenen aktuellen Meßwert optisch, z.B. bei Kontroll- oder Sevicearbeiten für das Bedienungspersonal, vor Ort unmittelbar darzustellen.

Eine Lösung für die optische Darstellung von einem Sensor aufgenommener aktuellen Messwerte offenbart der Artikel von Günther Pinkowski: "Einheitliche, herstellerunabhängige Anzeige-Bedienoberfläche für kommunikationsfähige Messumformer" ATP AUTOMATISIERUNGSTECHNISCHE PRAXIS, Bd. 34, Nr. 9, September 1992 (1992-09), Seiten 530-537, München,DE.

Die meisten Sensoren für Datenbussysteme ermöglichen eine direkte Anzeige (Vorortanzeige) des aktuellen Meßwertes. Hierzu ist ein Anzeigemodul in das Sensorgehäuse fest integriert. Das Anzeigemodul wertet das analoge Meßsignal des Sensors aus und stellt es optisch dar. Ist der Sensor jedoch ungünstig angeordnet, so ist die Anzeige für das Bedienpersonal nur schwer oder gar nicht ablesbar. Prinzipiell ist es möglich, das Anzeigemodul an einem anderen Ort unabhängig vom Sensor anzuordnen, um eine bessere Ablesung zu ermöglichen. Eine solche Maßnahme würde einen teuren zusätzlichen Verkabelungsaufwand bedeuten.
Vielfach sind auch Sensoren ohne Anzeigemodul im Einsatz. Besteht hier die Notwendigkeit einer Anzeige des Meßwertes vor Ort, so muß dieser Sensor aufwendig gegen einen neuen Sensor mit einem Anzeigemodul ausgetauscht werden. Häufig werden deshalb vorsorglich Sensoren mit einem Anzeigemodul eingesetzt, um jederzeit die Möglichkeit zu haben, den entsprechenden Meßwert vor Ort ablesen zu können. Diese vorsorgliche Maßnahme ist jedoch sehr teuer.
Der aktuelle Meßwert eines am Datenbus angeschlossenen Sensors liegt normalerweise im relativ weit entfernten Prozeßleitsystem vor. Denkbar wäre auch, die Meßwertinformation z.B. per Funk vom Prozeßleitsystem zu einem Sensor ohne Anzeigemodul zu übertragen, damit der aktuelle Meßwert vor Ort für das Bedienungspersonal verfügbar ist. Eine derartige Maßnahme ist aber sehr aufwendig und meist nicht praktikabel.
Aufgabe der Erfindung ist es eine Meßwertanzeigeeinheit für einen digitalen Datenbus
zu schaffen, die eine einfache Anzeige eines Meßwertes, räumlich getrennt vom entsprechenden Sensor, an einem beliebigen Ort am Datenbus ohne zusätzlichen Verkabelungsaufwand ermöglicht.

Gelöst wird diese Aufgabe durch eine
Meßwertanzeigeeinheit für ein digitales Datenbussystem, mit mindestens einem
Sensor zur Erfassung einer Prozessvariablen P1, dem zur Kennzeichnung eingehender bzw. ausgehender Telegramme eine Datenbusadresse DA zugeordnet ist, mit einer
Anzeigeeinrichtung, die über eine Kommunikationseinheit und eine Feldbusschnittstelle mit einer Datenbusleitung verbunden ist,
wobei die Feldbusschnittstelle alle Telegramme auf der Datenbusleitung liest und formatiert an die Kommunikationseinheit weiterleitet, die zur Auswahl bestimmter Telegramme auf die Datenbusadresse DA des Sensors einstellbar ist und die den Meßwertinhalt dieser ausgewählten Telegramme an die Anzeigeeinrichtung zur Darstellung des Meßwertes der Prozeßvariablen P1 weiterleitet.

Durch die erfindungsgemäße Meßwertanzeigeeinheit lassen sich die digital über die Datenbusleitung gesendeten Meßwerte eines bestimmten über seine Datenbusadresse auswählbaren Sensors, räumlich unabhängig vom Einbauort des entsprechenden Sensors, an einem beliebigen Ort der Datenbusleitung, einfach und ohne zusätzlichen Verkabelungsaufwand anzeigen.

Die Meßwertanzeigeeinheit ist dabei logisch auf dem Datenbus nicht vorhanden. D.h. die Meßwertanzeigeeinheit hat keine eigene Datenbusadresse und die übrigen Datenbusteilnehmer "sehen" die Meßwertanzeigeeinheit somit auch nicht. Es bedarf deshalb keiner Neukonfigurierung des Datenbussystems, für den Fall daß die Meßwertanzeigeeinheit neu an den Datenbus angeschlossen wird. Deshalb ist die erfindungsgemäße Meßwertanzeigeeinheit schnell einsetzbar.
Die Kommunikationseinheit filtert aus dem Datenstrom auf dem Datenbus die gewünschten Telegramme mit den entsprechenden Meßwerten eines bestimmten Sensors heraus und leitet sie zur optischen Darstellung an die Anzeigeeinrichtung weiter.

Gemäß einer bevorzugten Ausgestaltung der Erfindung, ist die Kommunikationseinheit mit einem Mikroschalter verbunden, der zur Auswahl der Datenbusadresse eines speziellen Sensors dient. Durch Änderung der eingestellten Datenbusadresse kann sehr einfach und schnell von einem Sensor auf einen anderen Sensor gewechselt werden.

Gemäß einer bevorzugten Ausgestaltung der Erfindung, weist die Anzeigeeinrichtung eine LCD-Anzeige auf.

Gemäß einer bevorzugten Ausgestaltung der Erfindung, weist der Mikroschalter einen weiteren Schalter zur Auswahl zwischen IN bzw. Out-Daten des Sensors auf. Damit können nicht nur Meßwerte die mittels Telegramme vom Sensor abgeschickt werden in der Anzeigeeinrichtung dargestellt werden, sondern auch Werte die mittels Telegramme an den Sensor geschickt werden.
Ein Beispiel hierfür sind die im Prozeßleitsystem gemittelte Meßwerte eines ausgewählten Sensors. Dies bedeutet, daß nicht der aktuelle Meßwert dieses ausgewählten Sensors, sondern auch der zeitlich gemittelte Meßwert in der Anzeigeeinheit darstellbar ist.
Denkbar ist auch die Differenz der Druckwerte zweier Drucksensoren oder die Differenz der Temperaturwerte zweier Temperatursensoren im Prozeßleitsystem zu berechnen und in einem Telgramm an den Sensor zu schicken.

Gemäß einer bevorzugten Ausgestaltung der Erfindung, weist die Kommunikationseinheit eine Lötbrücke zur Auswahl bestimmten Feldbus-Standards auf. Damit läßt sich die Anzeigeeinheit für unterschiedliche Standards, z.B. Profibus oder Foundation Fieldbus (Fieldbus), einsetzen.

Gemäß einer bevorzugten Ausgestaltung der Erfindung, erfolgt die Stromversorgung der Meßwertanzeigeeinheit über den Datenbus selbst. Dadurch erhöht sich die Flexibilität in der Anwendung der Meßwertanzeigeeinheit, da keine zusätzliche Spannungsversorgung für die Anzeigeeinheit benötigt wird.

Gemäß einer bevorzugten Ausgestaltung der Erfindung, erfolgt die Verbindung der Meßwertanzeigeeinheit mit dem Datenbus über einen T-Koppler.

Gemäß einer bevorzugten Ausgestaltung der Erfindung ist die erfindungsgemäße Meßwertanzeigeeinheit in mindestens einem Datenbussegment des Datenbussystems angeordnet, wobei jedes Datenbussegment über einen Segmentkoppler mit dem Prozeßleitsystem verbunden ist und mindestens ein Sensor in einem der beiden Segmente als Datensenke arbeitet.

Nachfolgend ist die Erfindung anhand eines in der Zeichnung dargestellten bevorzugten Ausführungsbeispiels näher erläutert. Es zeigen:
- Fig. 1: ein Datenbussystem mit einer erfindungsgemäßen Meßwertanzeigeeinheit in schematischer Darstellung,
- Fig. 2: eine erfindungsgemäße Meßwertanzeigeeinheit und ein Sensor in schematischer Darstellung,
- Fig. 3: eine erfindungsgemäße Meßwertanzeigeeinheit mit einem Datenbussystem mit zwei Segmenten

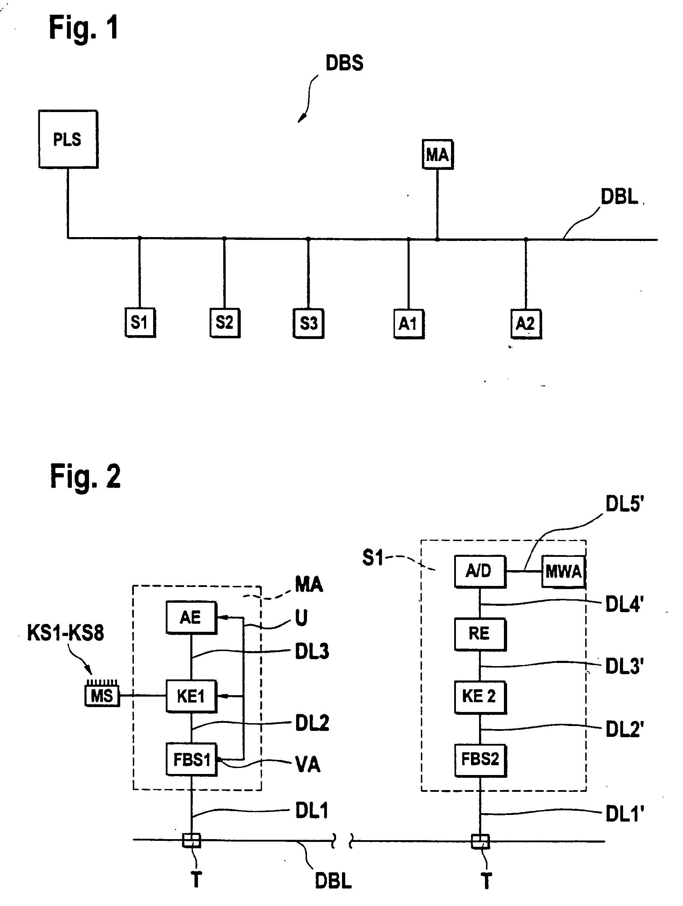

Das in Fig. 1 dargestellte Datenbussystem DBS umfaßt mehrere Datenbusteilnehmer nämlich ein Prozeßleitsystem PLS, mehrere Sensoren S und mehrere Aktoren A sowie eine Meßwertanzeigeeinheit MA, die jeweils über eine Datenbusleitung DBL miteinander verbunden sind. Das Prozeßleitsystem PLS ist in der Regel in einem Kontrollraum angeordnet von dem aus die gesamte Prozeßsteuerung erfolgt. Die Sensoren S und Aktoren A sind "im Feld" bei den einzelnen Prozeßkomponenten (Tank, Befüllvorrichtung, Pipeline etc.) angeordnet und werden deshalb auch als Feldgeräte bezeichnet. Die Sensoren S1, S2 und S3 erfassen z.B. die Prozeßvariablen Temperatur T, Druck D und Durchfluß F an einer bestimmten Prozeßkomponente. Bei den Aktoren A1 und A2 handelt es sich z.B. um Ventilsteuerungen, die den Durchfluß einer Flüssigkeit oder eines Gases durch eine Rohrleitung regeln. Für die Erfindung ist mindestens ein Sensor S notwendig. Die Aktoren A werden für die Erfindung nicht unbedingt benötigt.

Die Datenkommunikation zwischen dem Prozeßleitsystem PLS, den Sensoren S und den Aktoren A erfolgt in bekannter Weise nach einer international standardisierten Übertragungstechnik (z.B. RS 485 oder IEC 1158) mittels spezieller Protokolle ( z.B. Profibus oder Foundation Fieldbus (Fieldbus)).

Die Funktionsweise der Datenkommunikation ist nachfolgend anhand des Sensors S1 näher erläutert (Fig.2). Mit dem Sensor S1 wird eine Prozeßvariable z.B. die Temperatur T einer Flüssigkeit (nicht dargestellt) mit einem Meßwertaufnehmer MWA erfaßt und das Meßsignal in einem A/D-Wandler A/D digitalisiert. Der Meßwertaufnehmer MWA und der A/D-Wandler A/D sind über eine Datenleitung DL5' miteinander verbunden. Der digitalisierte Meßwert wird vom A/D-Wandler A/D über eine Datenleitung DL4' an eine Rechnereinheit RE weitergeleitet und dort abgespeichert.
Die Rechnereinheit RE übergibt zyklisch oder auf Aufforderung durch das Prozeßleitsystem PLS den Meßwert über eine Datenleitung DL3' an eine Kommunikationseinheit KE, die den Meßwert in ein Telegramm umsetzt, das über eine Datenleitung DL2' und eine Feldbusschnittstelle FBS2 auf die Datenbusleitung DBL gegeben wird.
Die Feldbusschnittstelle FBS2 unterstützt alle Sende- und Empfangsfunktionen entsprechend der eingesetzten Übertragungstechnik.
Das Telegramm enthält u.a. neben dem digitalisierten Meßwert Informationen zum Sender und zum Empfänger in Form von Datenbusadressen DA, die jeden Datenbusteilnehmer eindeutig kennzeichnen. In diesem Fall enthält das Telegramm die Datenbusadresse DAS1 des Temperatursensors S1 und die Datenbusadresse des gewünschten Empfängers.
Soll der Meßwert im Prozeßleitsystem PLS ausgewertet werden, muß als Empfängeradresse die Datenbusadresse DAPLS des Prozeßleitsystems PLS gewählt werden. Schickt das Prozeßleitsystem PLS ein Telegramm an den Temperatursensor S1, so ist die Datenbusadresse des Temperatursensors S1 die Empfängeradresse DAS1 und die Datenbusadresse des Prozeßleitsystems PLS die Absenderadresse DAPLS.

Das Datenbussystem DS kann z.B. nach dem Master-Slave-Prinzip arbeiten. D.h. das Prozeßleitsystem PLS fordert über ein Anruftelegramm einen Sensor S auf, den entsprechenden Meßwert auf die Datenbusleitung DBL zu geben. Der Sensor S antwortet mit einem entsprechenden Antworttelegramm.
Diese Aufforderung erfolgt meist zyklisch in bestimmten Zeitabständen.
Bei einem nach einem anderen Prinzip arbeitenden Datenbussystem geben die Sensoren ihre Meßwerte selbständig in gewissen Zeitabständen auf die Datenbusleitung.

In Fig. 2 ist die erfindungsgemäße Meßwertanzeigeeinheit MA näher dargestellt. Sie besteht im wesentlichen aus eine Feldbusschnittstelle FBS1, die über eine Datenleitung DL2 mit einer Kommunikationseinheit KE1 verbunden ist. Die Kommunikationseinheit KE1 besteht im wesentlichen aus einem Mikroprozessor. An die Kommunikationseinheit KE1 ist eine Anzeigeeinrichtung AE über eine Datenleitung DL3 angeschlossen. Die Verbindung der MA mit der Datenbusleitung DBL erfolgt über eine Datenleitung DL1 und einen T-Koppler. Die Kommunikationseinheit KE1 ist mit einem Mikroschalter MS verbunden.
Die Übertragungstechnik auf dem Datenbus entspricht internationalen Standards z.B. RS 485 asynchron 11 Bit/Zeichen oder IEC 1158-2 8 Bit/Zeichen.
Im dargestellten Fall weist die Feldbusschnittstelle FBS1 einen SIM1 Baustein der Fa. Siemens auf.
Dieser Baustein ermöglicht eine Stromauskopplung von der Datenbusleitung DBL, so daß neben der Feldbusschnittstelle FBS1 auch die Anzeigeeinheit AE und die Kommunikationseinheit KE1 über eine am Versorgungsanschluß VA angeschlossenen Stromleitung U mit Strom versorgt werden können.
Nicht jede Feldbusschnittstelle weist einen derartigen Versorgungsanschluß auf, so daß teilweise eine separate Stromversorgung notwendig ist.

Nachfolgend ist die Funktionsweise der Erfindung näher erläutert.

Das Datenbussystem DS weist mindestens einen Sensor S1 zur Erfassung einer Prozeßvariablen P1, im vorliegenden Fall der Temperatur T auf. Der Sensor S1 empfängt und sendet, wie bereits erwähnt, Telegramme über die Datenbusleitung DBL. Zur Kennzeichnung der eingehenden bzw. ausgehenden Telegramme ist dem Sensor S1 eindeutig eine Datenbusadresse DA zugeordnet.
Mit Hilfe des Mikroschalters MS läßt sich die Datenbusadresse eines gewünschten Sensors S z.B. des Sensors S1 über sieben Kippschaltern ( Dip-Schalter) KS1-KS7 des Mikroschalters MS leicht auswählen. Diese Auswahl erfolgt vom Bedienpersonal direkt an der Meßwertanzeigeeinheit MA (entweder ist die Datenbusadresse des gewünschten Sensors S bekannt oder die Auswahl erfolgt optisch durch Ändern der Datenbusadresse bis ein gewünschter Meßwert in der Anzeigeeinheit AE erscheint). Aufgrund der ausgewählten Adresse selektiert die Kommunikationseinheit KE1 aus dem Datenstrom, der ihr formatiert von der Datenbusleitung DBL über die Feldbusschnittstelle FBS1 zugeführt wird, diejenigen Telegramme, die die Datenbusadresse des Sensors S1 aufweisen, aus . Die Kommunikationseinheit KE1 liest den gewünschten Meßwertinhalt aus den selektierten Telegrammen aus und leitet ein entsprechendes Signal an angeschlossene Anzeigeeinrichtung AE weiter. In der Anzeigeeinrichtung AE wird der Meßwert angezeigt.

Bei der Anzeigeeinrichtung AE kann es sich z.B. um ein Flüssigkristallanzeige (LCD-Display) handeln, die eine sehr stromsparende Anzeige ermöglicht.

Über einen zusätzlichen Kippschalter KS8 des Mikroschalters MS ist auch eine Auswahl zwischen IN/OUT-Telegrammen möglich.
Nicht nur die vom Sensor S1 gesendeten Telegramme enthalten seine Datenbusadresse sondern auch die an den Sensor S1 gesendeten Telegramme. Werden die IN -Telegramme über den Kippschalter K8 ausgewählt, so erfolgt nur die Anzeige der Daten, die in den vom Sensor S1 ausgehenden Telegrammen enthalten sind. Werden jedoch die OUT-Telegramme über den Kippschalter K8 ausgewählt, so werden nur die Daten dargestellt, die in Telegrammen an den Sensor S1 enthalten sind. Bei diesen Daten kann es sich z.B. um im Prozeßleitsystem PLS modifizierte Meßwerte des Sensors S1 handeln. Eine derartige Modifikation kann z.B. in einer Mittelwertbildung liegen. Die Meßwerte des Sensors S1 werden dabei im Prozeßleitsystem PLS zeitlich gemittelte und der Mittelwert über ein OUT-Telegramm an den Sensor S1 gesendet. Dieser Mittelwert wird dann in der Anzeigeeinrichtung AE dargestellt. Denkbar sind auch andere mathematischen Modifikationen.
Denkbar ist auch die Differenz der Druckwerte zweier Drucksensoren oder die Differenz der Temperaturwerte zweier Temperatursensoren im Prozeßleitsystem PLS zu berechnen und diesen Differenzwert in einem Telgramm an den Sensor S1 zu schicken und ihn so zur Anzeige zu bringen.

Die Anzeigeeinheit AE ist nicht auf nur einen Feldbusstandard beschränkt. Deshalb ist eine Lötbrücke (nicht dargestellt) an der Kommunikationseinheit KE1 vorgesehen, über die eine Auswahl zwischen zwei unterschiedlichen Protokollen (z.B. Profibus und Foundation Fieldbus ) möglich ist.

Normalerweise erfolgt die Stromversorgung der Meßwertanzeigeeinheit MA separat, d.h. über eine getrennte Stromversorgung. In diesem Fall ist vor Ort ein Stromanschluß notwendig, der nicht unbedingt bei jeder Prozeßkomponente vorhanden ist. In vorteilhafter Weise wird deshalb vorgeschlagen, die Stromversorgung der Meßwertanzeigeeinheit MA über die Datenbusleitung DBL selbst durchzuführen. Der Baustein SIM1 der Fa. Siemens ist hierfür bereits vorgesehen. Über die Stromversorgungsleitung U ist der Versorgungsausgang VA mit der Anzeigeeinheit AE und mit der Kommunikationseinheit KE1 verbunden. Die technischen Daten des Bausteins SIM1 sind aus der über das Internet zugänglichen Beschreibung http://www.aut.sea.siemens.com/pic/products-1-sim1.htm "SIMATIC NET, SIM 1 Anwenderbeschreibung, Version: V1.1, vom 05.05.1997 zu entnehmen.

Der Anschluß der Meßwertanzeigeeinheit MA an die Datenbusleitung DBL erfolgt, wie bereits erwähnt, über die Datenleitung DL1. Diese Datenleitung DL1 kann mechanisch mit der Datenbusleitung verbunden sein. Eine derartige Verbindung ist aufwendig und nur schwer lösbar. Deshalb ist als Verbindung der T-Koppler T vorgesehen, der im Prinzip an jeder beliebigen Stelle mit der Datenbusleitung DBL verbunden werden kann. Die Verbindung erfolgt durch einfaches Lösen einer vorhandenen Steckverbindung am Datenbus und Zwischenschalten des T-Kopplers T. In gleicher Weise kann die Verbindung auch wieder einfach gelöst werden. Die Enden der Datenbusleitung DBL werden vom T-Koppler gelöst und anschließend zusammengesteckt. Ein derartiger T-Koppler kann z.B. entsprechend dem in der europäischen Offenlegungsschrift EP 0903651 A1,Fa. Endress+Hauser beschriebenen Adapter aufgebaut sein.

Wird die Information des Meßwertes eines Sensors S vor Ort gebraucht und besitzt dieser ausgewählte Sensor entweder kein eigenes Anzeigemodul oder ist sein Anzeigemodul schwer zugänglich, so kann mit der erfindungsgemäßen Meßwertanzeigeeinheit MA der Meßwert dieses ausgewählten Sensors einfach und ohne Aufwand an jedem beliebigen Ort am Datenbus dargestellt werden.

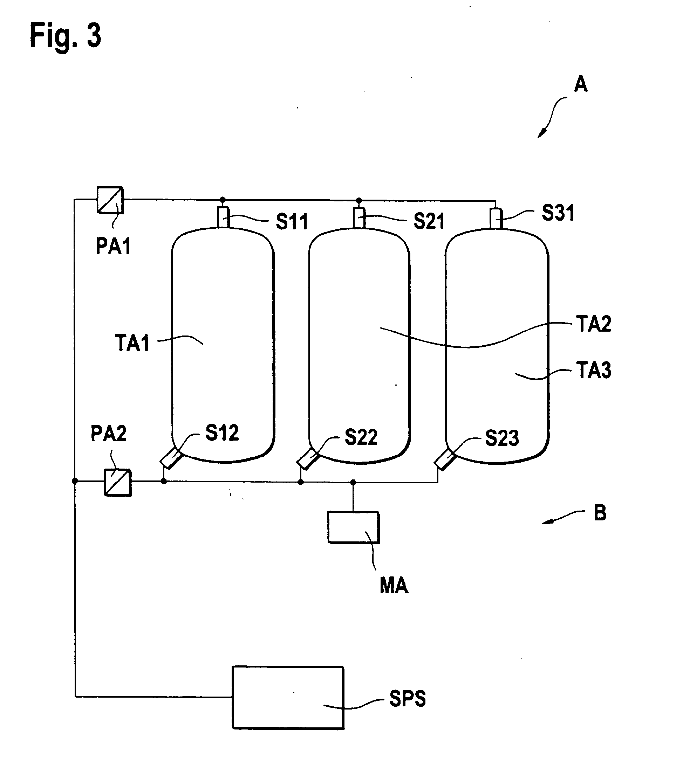

In Fig. 3 ist ein Datenbussystem DBS mit zwei Segmenten A, B dargestellt. Die beiden Segmente A bzw. B sind jeweils über Segmentkoppler PA1 bzw. PA2 mit dem Prozessleitsystem PLS verbunden. Die beiden Segmentkoppler PA1 und PA2 haben eine gewisse Filterfunktion, wie z.B. für den Übergang der Datenbussysteme Profibus PA/DP bekannt. In das Datensegment A gelangen keine Telegramme, die für das Datensegment B bestimmt sind und umgekehrt.

Das Segment A weist drei Sensoren S11, S21 und S31 auf, die jeweils am Einlauf eines Flüssigkeitstanks TA1, TA2 und TA3 angeordnet sind.
Das Segment B weist drei Sensoren S12, S22 und S32 auf, die jeweils am Auslauf der Flüssigkeitstanks TA1, TA2 und TA3 angeordnet sind. Bei den Sensoren S11, S21, S31, S12, S22 und S23 handelt es sich um Drucksensoren. Aus der Differenz der jeweiligen Meßwerte lässt sich die Füllhöhe der Flüssigkeit im jeweiligen Flüssigkeitstank TA1, TA2 und TA3 bestimmen.
Die Füllhöhe kann in keinem der Sensoren S11, S21, S31, S12, S22 und S23 direkt angezeigt werden, da immer die Differenz zweier Meßpunkte (Sensoren) hierzu notwendig ist. Diese Berechnung erfolgt im Prozessleitsystem PLS. Im Segment B ist noch eine erfindungsgemäße Meßwertanzeigeeinheit MA angeordnet. In dieser kann die aktuelle Füllhöhe eines oder mehrerer der Tanks TA1, TA2 bzw. TA3 dargestellt werden.
Hierzu muß das entsprechende Telegramm mit dem Meßwert Füllhöhe z.B. Tank TA1 in das Segment B gesendet werden. Dies kann dadurch realisiert werden, daß einer der Sensoren S12, S22 oder S23 als Datensenke arbeitet. Dies bedeutet, daß der Sensor das entsprechende an ihn abgesendete Telegramm nur liest, aber der Inhalt keine weiteren Reaktionen hervorgeruft. Der Sensor verhält sich so als hätte er gar kein Telegramm erhalten.
Bei diesem Anwendungsbeispiel kann in einfacher Weise die Füllhöhe eines Flüssigkeitstanks optisch dargestellt werden.

## Patentansprüche

1. Vorrichtung mit Meßwertanzeigeeinheit für ein digitales Datenbussystem, und mit mindestens einem
Sensor S zur Erfassung einer Prozessvariablen P1, dem zur Kennzeichnung eingehender bzw. ausgehender Telegramme eine Datenbusadresse DA zugeordnet ist, mit einer
Anzeigeeinrichtung AE, die über eine Kommunikationseinheit KE1 und eine Feldbusschnittstelle FBS1 mit einer Datenbusleitung DBL verbunden ist, wobei die Feldbusschnittstelle FBS1 so ausgeführt ist, daß sie alle Telegramme auf der Datenbusleitung DBL liest und formatiert an die Kommunikationseinheit KE1 weiterleitet, die zur Auswahl bestimmter Telegramme auf die Datenbusadresse DA des Sensors S einstellbar ist und die den Meßwertinhalt dieser ausgewählten Telegramme an die Anzeigeeinrichtung AE zur Darstellung des Meßwertes der Prozeßvariablen P1 weiterleitet, **dadurch gekennzeichnet, daß**
wobei die Messwertanzeigeeinheit keine eigene Datenbusadresse besitzt und so ausgeführt ist, daß sie an einen beliebigen Ort der Datenbusleitung DBL anschließbar ist.

2. Vorrichtung nach Anspruch 1, wobei die Kommunikationseinheit KE mit einem Mikroschalter MS verbunden ist, der zur Auswahl der Datenbusadresse eines Sensors S dient.

3. Vorrichtung nach Anspruch 1 oder 2, wobei die Anzeigeeinrichtung AE eine LCD-Anzeige aufweist.

4. Vorrichtung nach einem der vorhergehenden Ansprüche, wobei der Mikroschalter MS einen Kippschalter K8 zur Auswahl zwischen IN bzw. Out-Daten des Sensors S aufweist.

5. Vorrichtung nach einem der vorhergehenden Ansprüche, wobei die Kommunikationseinheit KE1 eine Lötbrücke zur Auswahl bestimmten Feldbus-Standards aufweist.

6. Vorrichtung nach einem der vorhergehenden Ansprüche, wobei die Stromversorgung der Meßwertanzeigeeinheit MA über die Datenbusleitung DBL selbst erfolgt.

7. Vorrichtung nach einem der vorhergehenden Ansprüche, wobei die Verbindung der Meßwertanzeigeeinheit MA mit der Datenbusleitung DBL über einen T-Koppler erfolgt.

8. Vorrichtung nach einem der vorhergehenden Ansprüche, angeordnet in mindestens einem Datenbussegment (A, B) des Datenbussystems DBS, wobei jedes Datenbussegment (A, B) über einen Segmentkoppler PA1 bzw. PA2 mit dem Prozeßleitsystem PLS verbunden ist und mindestens ein Sensor in einem der beiden Segmente als Datensenke arbeitet.

## Claims

1. A device with a measurement display unit for a digital data bus system and with at least one sensor S for the detection of a process variable P1 with which a data bus address DA is associated for the identification of ingoing or outgoing telegrams, with a display device AE which is connected to a data bus line DBL via a communication unit KE1 and a field bus interface FBS 1, wherein the field bus interface FBS1 is constructed so that it reads all telegrams on the data bus line DBL and transmits them in formatted form to the communication unit KE1, which can be set to the data bus address DA of the sensor S for selection of particular telegrams and which transmits the measurement content of these selected telegrams to the display device AE for displaying the measurement of the process variable P1, **characterised in that** the measurement display unit does not have its own data bus address and is constructed so that it is connectable to any point on the data bus line DBL.

2. A device according to claim 1, wherein the communication unit KE is connected to a microswitch MS, which serves to select the data bus address of a sensor S.

3. A device according to claim 1 or 2, wherein the display device AE has an LCD display.

4. A device according to any one of the preceding claims, wherein the microswitch MS has a rocker switch K8 for selection between IN and OUT data of the sensor S.

5. A device according to any one of the preceding claims, wherein the communication unit KE1 has a solder bridge for the selection of a particular field bus standard.

6. A device according to any one of the preceding claims, wherein power is supplied to the measurement display unit MA via the data bus line DBL itself.

7. A device according to any one of the preceding claims, wherein the, measurement display unit MA is connected to the data bus line DBL by a T-coupler.

8. A device according to any one of the preceding claims, arranged in at least one data bus segment (A, B) of the data bus system DBS, wherein each data bus segment (A, B) is connected to the process control system PLS via a segment coupler PA1 or PA2, and at least one sensor in one of the two segments operates as a data sink.

## Revendications

1. Dispositif avec une unité d'affichage des valeurs mesurées, destiné à un système de bus de données numérique, et avec au moins un
capteur S destiné à l'acquisition d'une variable process P1, auquel est attribué une adresse de bus de données DA pour l'identification des télégrammes entrants ou sortants, avec un
dispositif d'affichage AE, qui est relié avec une ligne de bus de données DBL par l'intermédiaire d'une unité de communication KE1 et d'une interface de bus de terrain FBS1, l'interface de bus de terrain FBS1 étant conçue de telle manière à lire tous les télégrammes sur la ligne de bus de données DBL et les transmettre de façon formatée à l'unité de communication KE1, qui est réglable pour la sélection de certains télégrammes à l'adresse de bus de données DA du capteur S et qui transmet le contenu de la valeur mesurée de ces télégrammes sélectionnés au dispositif d'affichage AE en vue de l'affichage de la valeur mesurée de la variable process P1, **caractérisé en ce que**
l'unité d'affichage des valeurs mesurées ne possède pas d'adresse de bus de données propre et est conçue de telle manière à pouvoir être raccordée en tout point de la ligne de bus de données DBL.

2. Dispositif selon la revendication 1, pour lequel l'unité de communication KE1 est reliée à un micro-interrupteur MS, qui sert à la sélection de l'adresse de bus de données d'un capteur S.

3. Dispositif selon la revendication 1 ou 2, pour lequel le dispositif d'affichage AE comporte un afficheur LCD.

4. Dispositif selon l'une des revendications précédentes, pour lequel le micro-interrupteur MS comporte un interrupteur à bascule K8 destiné à la sélection des données entrantes ou sortantes du capteur S.

5. Dispositif selon l'une des revendications précédentes, pour lequel l'unité de communication KE1 comporte un pont de soudure destiné à la sélection de standards de bus de terrain déterminés.

6. Dispositif selon l'une des revendications précédentes, pour lequel l'alimentation électrique de l'unité d'affichage des valeurs mesurées MA est réalisée par l'intermédiaire de la ligne de bus de données DBL elle-même.

7. Dispositif selon l'une des revendications précédentes, pour lequel la connexion de l'unité d'affichage des valeurs mesurées MA avec la ligne de bus de données DBL est réalisée au moyen d'un coupleur en T.

8. Dispositif selon l'une des revendications précédentes, disposé dans au moins un segment de bus de données (A, B) du système de bus de données DBS, chacun des segments de bus de données (A, B) étant relié par l'intermédiaire d'un coupleur de segment PA1 ou PA2 avec le système numérique de contrôle commande PLS, et au moins un capteur fonctionnant en tant que puits de données dans l'un des deux segments.
